# EUROPÄISCHE PATENTSCHRIFT

(11) **EP 0 730 337 B1**
(45) Veröffentlichungstag und Bekanntmachung des Hinweises auf die Patenterteilung: **04.08.1999**
(21) Anmeldenummer: 96100964.4
(22) Anmeldetag: 24.01.1996
(51) Int. Cl.: H02K 49/00, H02K 51/00

(54) **Antriebsaggregat für Nebenaggregate eines Kraftfahrzeuges**
Driving unit for vehicle auxiliary units
Unité d'entraînement pour appareils auxiliaires de véhicules

(30) Priorität: 03.03.1995 DE 19507434
(43) Veröffentlichungstag der Anmeldung: 04.09.1996
(73) Patentinhaber: DBB Fuel Cell Engines GmbH, 73230 Kirchheim/Teck-Nabern (DE)
(72) Erfinder: Rennefeld, Alfons, Dipl.-Ing., D-70327 Stuttgart (DE); Friedrich, Jürgen, Dr.-Ing., D-73732 Esslingen (DE); Noreikat, Karl-Ernst, Dipl.-Ing., D-73733 Esslingen (DE)
(74) Vertreter: Kocher, Klaus-Peter Dipl.-Phys

(56) Entgegenhaltungen:
- DE-A- 2 814 884
- FR-A- 2 630 868
- GB-A- 1 193 965
- GB-A- 2 278 242

## Beschreibung

Die Erfindung betrifft ein Antriebsaggregat für Nebenaggregate eines Kraftfahrzeuges, mit einer angetriebenen Welle und einer Antriebsanordnung, über die das Nebenaggregat an die angetriebene Welle angeschlossen ist, insbesondere für den Lüfter eines Kraftfahrzeugmotors.

Es ist bekannt (DE-OS 22 54 390), den Lüfter für den Kühler eines Kraftfahrzeugmotores über eine Magnetkupplung z.B. an die Kurbelwelle des Motors anzuschließen, wobei die Magnetkupplung eine fest mit der Kurbelwelle verbindbare Antriebswelle aufweist, die den Primärteil der Kupplung bildet und mit einem frei drehbar gelagerten Sekundärteil, der mit dem Lüfterrad verbunden ist, kuppelbar ist. Bei der bekannten Bauart ist dem einen Kupplungsteil eine Hysteresescheibe und dem anderen Teil ein Magnet zugeordnet und es wird vorgesehen, daß der Arbeitsspalt zwischen Magnet und Hysteresescheibe in Abhängigkeit von der Antriebsdrehzahl in axialer Richtung veränderbar ist. Dies wird dort durch einen Fliehkraftregler erreicht. Dadurch kann das übertragbare Drehmoment immer kleiner werden, so daß bei den höheren Motordrehzahlen, bei denen in der Regel auch die Fahrgeschwindigkeit größer ist, die Antriebsleistung für den Lüfter zurückgefahren werden kann.

Es ist auch bekannt, den Lüfter für den Kühler eines Kraftfahrzeugmotors mit der Motorwelle über eine Flüssigkeitsreibungskupplung zu verbinden (DE-Gbm 88 11 100), die dafür sorgt, daß der Lüfter in Abhängigkeit von der Kühllufttemperatur, gegebenenfalls auch in Abhängigkeit von der Kühlwassertemperatur, schneller oder langsamer angetrieben wird, und zwar unabhängig davon, wie schnell sich der Motor dreht.

Beide Bauarten ermöglichen aber lediglich eine Herabsetzung der Lüfterdrehzahl gegenüber der Drehzahl der Antriebswelle.

Der Erfindung liegt die Aufgabe zugrunde, ein Antriebsaggregat der eingangs genannten Art zu schaffen, mit dem die Drehzahl zum Antrieb des Nebenaggregates vollkommen unabhängig von der Drehzahl der angetriebenen Welle wählbar ist.

Zur Lösung dieser Aufgabe wird ein Antriebsaggregat mit den Merkmalen des Anspruchs 1 vorgeschlagen.

Durch diese Ausgestaltung kann man je nach Statorerregung die Drehzahl des Rotors, an dem beispielsweise die Lüfterschaufeln befestigt werden, gegenüber der Antriebsdrehzahl verringern, so wie das auch mit den Einrichtungen nach dem Stand der Technik möglich ist. Es wird aber auch möglich, die Rotordrehzahl gegenüber der Drehzahl des mit der Antriebswelle mitrotierenden Stators noch zu erhöhen, so daß dadurch auch höhere Lüfterdrehzahlen verwirklichbar sind, als sie von der Antriebswelle zur verfügung gestellt werden. Dabei ist es nicht notwendig, ein aufwendiges Getriebe durch Kupplungen einzuschalten. Vielmehr ermöglicht die Verwendung des Elektromotors als Kupplung diese vorteilhafte Ausgestaltung. Der Elektromotor braucht auch nur auf die Differenz der maximal gewünschten Lüfterdrehzahl und der Drehzahl der Antriebswelle ausgelegt zu werden, da sich der Stator dreht.

Aus der FR 22 58 737 A ist es zwar bekannt, auf einer Welle drehbare Spulenanordnungen zuzuordnen, die mit einer fest mit der Welle verbundenen Spulenanordnung einen Generator bilden, der beispielsweise durch Wind oder Wasserkraft angetrieben sein kann. Die Verwendung eines Elektromotors als Kupplung für Nebenaggregate von Kraftfahrzeugen wird durch diese bekannte Anordnung aber nicht nahegelegt. Das gilt auch für bekannte Anordnungen (DE-AS 10 70 282), die aus einer elektrischen Drehfeldmaschine und aus einer zwischen dieser und einer Arbeits- oder Kraftmaschine eingeschalteten elektrodynamischen Kupplung bestehen, deren beide drehbaren Teile Wicklungen tragen. Eine Wicklung der Kupplung und eine Mehrphasenwicklung der elektrischen Drehfeldmaschine sind dabei an das gleiche Netz angeschlossen. Eine solche Ausgestaltung läßt sich für ein Antriebsaggregat für ein Nebenaggregat eines Kraftfahrzeuges nicht verwirklichen. Das Dokument GB-A-2 278 242 beschreibt ein elektromagnetisches Getriebe, das aus einem Generator und einem Elektromotor besteht, wobei der auf der angetriebenen Welle angeordnete Stator und der Rotor den Generator und der Rotor und eine im Gehäuse angeordnete Wicklung den Elektromotor bilden. Diese Vorrichtung ermöglicht nur die Drehzahl des Rotors bei gleichzeitiger Änderung des Drehmoments zu verringern.

In Weiterbildung der Erfindung kann der Rotor unmittelbar auf die angetriebene Welle aufgesetzt sein. Zwischen ein die angetriebene Welle aufnehmendes Gehäuse und den Stator kann in Weiterbildung der Erfindung auch eine Leistungselektronik zur Steuerung der Statorerregung eingesetzt werden, die zweckmäßig drehbar auf der angetriebenen Welle sitzt, fest mit dem Gehäuse verbunden ist und über Schleifringe die Stromübertragung auf den Stator vornimmt.

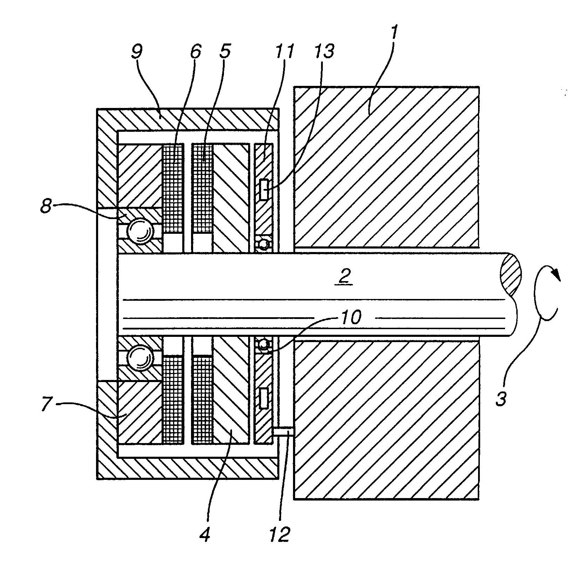

Die Erfindung ist anhand eines Ausführungsbeispieles in der Zeichnung dargestellt und wird im folgenden erläutert.

Die einzige Figur zeigt dabei in schematischer Darstellung eine in einem Gehäuse (1) gelagerte Antriebswelle (2), die beispielsweise das Ende der Kurbelwelle eines Verbrennungsmotores sein kann. Auf diese im Sinn des Pfeiles (3) angetriebene Welle (2) ist eine Scheibe drehfest aufgeflanscht, die den Stator (4) eines Elektromotors bildet und mit einer ersten Spulenanordnung (5) versehen ist. Der Spulenanordnung (5) gegenüber und durch einen Luftspalt von dieser getrennt ist eine zweite Spulenanordnung (6) vorgesehen, die fest mit einem drehbaren Ring verbunden ist, der den Rotor (7) des Elektromotors bildet und der über ein Kugellager (8) drehbar auf die Welle (2) aufgesetzt ist. Der Ring (Stator 7) ist mit einer Glocke (9) verbunden, die ihn, seine Spule (6) und die Statorscheibe (4) mit der Spulenanordnung (5) außen umgibt.

Zwischen das feststehende Gehäuse (1) und die drehbare Statorscheibe (4) ist beim Ausführungsbeispiel mit Hilfe eines Kugellagers (10) eine Scheibe (11) aufgesetzt, die über einen Steg (12), der als Drehmomentstütze dient, mit dem Gehäuse (1) verbunden ist und deshalb gegenüber diesem stillsteht. Diese Scheibe (11) kann eine Leistungselektronik aufnehmen, die beispielsweise über den Steg (12) elektrisch mit entsprechenden Zuleitungen im Gehäuse (1) verbunden ist und über nicht näher dargestellte Schleifringe die elektrische Verbindung zum drehenden Stator (4) herstellen kann.

Die Steuerung der Statorerregung kann daher über die Leistungselektronik, die bei (13) schematisch angedeutet ist, erfolgen, so daß die Drehzahl des Rotors (7) gegenüber der Drehzahl des Stators (4) steuerbar wird und dabei kann die Drehzahl des Rotors (7) gleich groß wie die Drehzahl des mit der Welle (2) mitgedrehten Stators (4) gewählt werden. Sie kann aber auch höher oder geringer sein. Werden daher mit der Glocke (9) beispielsweise die Schaufeln eines Lüfters für den Kühler eines Kraftfahrzeugmotors verbunden, so läßt sich die Leistungsaufnahme dieses Lüfters beliebig steuern, je nachdem, welche Anforderungen an die Lüfterleistung gestellt werden. Der vom Stator (4) und Rotor (7) gebildete Elektromotor braucht dabei z.B. nur auf eine Drehzahl von 1000 U/min ausgelegt zu werden, wenn als maximale Lüfterdrehzahl eine solche von 2000 U/min gewünscht ist und sich die Antriebswelle (2) im Normalfall mit 1000 U/min dreht. Dies ermöglicht eine raumsparende Anordnung.

Die neue Ausgestaltung bietet auch den Vorteil, daß dann, wenn die Glocke (9) gegenüber der drehenden Welle (2) festgehalten wird, die Anordnung als Generator arbeiten kann, so daß dabei Energie gespeichert werden kann, wenn die Welle (2) umläuft, ohne daß jedoch ein Lüfterantrieb oder ein Antrieb eines anderen Nebenaggregates erforderlich ist. Mit der Glocke (9) könnten natürlich nicht nur die Schaufeln eines Lüfters verbunden werden. Es wäre natürlich in an sich bekannter Weise auch möglich, über diese Glocke (9), die beispielsweise mit einer Riemenscheibe ausgerüstet werden könnte, auch die Wasserpumpe oder andere Nebenaggregate anzutreiben.

## Patentansprüche

1. Antriebsaggregat für ein Nebenaggregat eines Kraftfahrzeuges, mit einer angetrieben Welle (2) und einer Antriebsanordnung, über die das Nebenaggregat an die angetriebene Welle angeschlossen ist, insbesondere für den Lüfter eines Kraftfahrzeugmotors, wobei als Antriebsanordnung eine einzige elektrische Maschine dient, deren Stator (4) fest auf der angetriebenen Welle (2) sitzt und deren Rotor (7) in seiner Drehzahl durch Steuerung der Statorerregung gegenüber dem Stator (4) steuerbar ist, wobei
das Nebenaggregat ohne Drehzahlübersetzung mit dem Rotor (7) verbunden ist, wobei die Rotordrehzahl in Abhängigkeit von der gewünschten Aggregatedrehzahl gegenüber der Wellendrehzahl erhöh- oder verringerbar ist.

2. Antriebsaggregat nach Anspruch 1, wobei
der Rotor (7) drehbar auf die angetriebene Welle (2) aufgesetzt ist.

3. Antriebsaggregat nach Anspruch 1, wobei
zwischen ein die angetriebene Welle (2) aufnehmendes Gehäuse und den Stator (4) eine Leistungselektronik (13) zur Steuerung der Statorerregung gesetzt ist.

4. Antriebsaggregat nach Anspruch 3, wobei
die Leistungselektronik (13) in einer drehbar auf der angetriebenen Welle, aber fest mit dem Gehäuse (1) verbundenen Scheibe (11) angeordnet ist und die Stromübertragung durch Schleifringe auf den Stator erfolgt.

## Claims

1. A driving unit for a secondary unit of a motor vehicle, having a driven shaft (2) and a drive arrangement by means of which the secondary unit is connected to the driven shaft, in particular for the fan of a motor vehicle engine, in which a single electric motor serves as the drive arrangement, the stator (4) of which is mounted so as to be fixed on the driven shaft (2) and the rotor (7) of which can be controlled in terms of its speed relative to the stator (4) by controlling the excitation of the stator, wherein
the secondary unit is linked to the rotor (7) without speed transmission and wherein the rotor speed can be increased or decreased relative to the shaft speed depending on the desired speed of the unit.

2. A driving unit as claimed in claim 1, wherein
the rotor (7) is rotatably mounted on the driven shaft (2).

3. A driving unit as claimed in claim 1, wherein
power electronics (13) are placed between a housing in which the driven shaft (2) is enclosed and the stator (4) as a means of controlling the stator excitation.

4. A driving unit as claimed in claim 3, wherein
the power electronics (13) are arranged in a disk (11) which is rotatable on the driven shaft but securely joined to the housing (1) and the current is transmitted to the stator by means of sliprings.

## Revendications

1. Unité d'entraînement pour un appareil auxiliaire d'un véhicule automobile, comportant un arbre entraîné (2) et un dispositif d'entraînement, au moyen duquel l'appareil auxiliaire est raccordé à l'arbre entraîné, notamment pour le ventilateur d'un moteur de véhicule automobile, et dans lequel on utilise comme dispositif d'entraînement un seul moteur électrique, dont le stator (4) est monté de façon fixe sur l'arbre entraîné (2) et dont la vitesse de rotation du rotor (7) peut être commandée par rapport au stator (4) par la commande de l'excitation statorique, et dans lequel l'appareil auxiliaire est relié au rotor (7), sans démultiplication de la vitesse de rotation, la vitesse de rotation du rotor pouvant être accrue ou réduite par rapport à la vitesse de rotation de l'arbre, en fonction de la vitesse de rotation désirée de l'appareil.

2. Unité d'entraînement selon la revendication 1, dans laquelle le rotor (7) est monté de manière à pouvoir tourner sur l'arbre entraîné (2).

3. Unité d'entraînement selon la revendication 1, dans laquelle un système électronique de puissance (13) servant à commander l'excitation statorique est monté entre un carter, qui loge l'arbre entraîné (2), et le stator (4).

4. Unité d'entraînement selon la revendication 3, dans laquelle le système électronique de puissance (13) est disposé dans un disque (11) qui peut tourner sur l'arbre entraîné, mais est relié de façon fixe au carter (1) et que la transmission de courant au stator s'effectue au moyen de bagues glissantes.
